# EUROPÄISCHE PATENTSCHRIFT

(11) **EP 0 419 726 B1**
(45) Veröffentlichungstag und Bekanntmachung des Hinweises auf die Patenterteilung: **08.06.1994**
(21) Anmeldenummer: 89118085.3
(22) Anmeldetag: 29.09.1989
(51) Int. Cl.: H02M 3/335

(54) **Schaltungsanordnung für ein Schaltnetzteil**
Circuit arrangement for a switching power supply
Disposition de circuit pour alimentation à découpage

(43) Veröffentlichungstag der Anmeldung: 03.04.1991
(73) Patentinhaber: SIEMENS AKTIENGESELLSCHAFT, 80333 München (DE)
(72) Erfinder: Feldtkeller, Martin, Dipl.-Ing., D-8000 München 80 (DE)

(56) Entgegenhaltungen:
- EP-A- 0 234 413
- DE-A- 3 607 018
- SIEMENS COMPONENTS, vol. XXIII, no. 6, 31. Dezember 1988, München, DE, Seiten 260-264 ; R.Blöckl : "TDA 4918/4919 - New Generation of Control ICs for Switched-Mode Power Supplies", Part 2 : Applications.

## Beschreibung

Die Erfindung bezieht sich auf eine Schaltungsanordnung gemäß dem Oberbegriff des Anspruchs 1. Schaltnetzteile (SNTs) mit solchen Schaltungen sind in den verschiedensten Ausführungen bekannt. Eine Übersicht über die unterschiedlichen SNT-Konzepte findet sich in dem von Joachim Wüstehube herausgegebenen Lehrbuch "Schaltnetzteile", Expert-Verlag, Grafenau, 1979.

Schaltnetzteile sind normalerweise dafür vorgesehen, eine gleichgerichtete und geglättete Netzspannung über einen primärseitig geschalteten Transformator in mindestens eine stabilisierte Gleichspannung umzuwandeln. Der Schalter wird dabei in aller Regel durch eine integrierte Schaltung angesteuert, die neben der Ansteuerung auch die Regelung und gewisse Überwachungsfunktionen übernimmt. Solche Ansteuerbausteine sind in mehreren Varianten, die sich u.a. auch in der Art der Stromversorgung voneinander unterscheiden, auf dem Markt.

So wird bei der kommerziell verfügbaren Steuerschaltung TDA 4605 und 4918 die beispielsweise in der Siemens-Produktinformation "IC's für die Unterhaltungselektronik", Auflage 8.87, auf den S. 46 bis 63 und in den "Siemens Components" XXIII (1988), Nº6, S260-264 beschrieben werden, die Versorgungsspannung U_{V} auf folgende Weise bereitgestellt. Bis zum Erreichen einer Aktivierungsschwelle U_{E} wird die Energie aus der gleichgerichteten Netzspannung bezogen, und zwar über einen Anlaufwiderstand, wobei die Versorgungsspannung einem in Reihe zum Anlaufwiderstand und parallel zur Steuerschaltung liegenden Ladekondensator abgenommen wird. Diese direkte Speisung aus der Primärspannung ist möglich, weil die Schaltung in ihrem inaktiven Zustand relativ wenig Strom aufnimmt. Bei Überschreiten des Wertes U_{E} wird die Steuerschaltung aktiviert, d.h. es werden sämtliche Arbeitspunkte (insbesondere die Referenzspannung mit den davon abgeleiteten Bezugsgrößen sowie die Schaltschwellen für die U_{V}-Überwachung) erzeugt; liegt dann keine Störung vor, schwingt das Schaltnetzteil an. Die aktivierte Steuerschaltung zieht relativ viel Strom. Sie kann daher nur kurze Zeit von dem sich rasch entladenden Ladekondensator gespeist werden und erhält ihre Versorgungsspannung nunmehr von einer parallel zum Kondensator liegenden Transformatorwicklung, die nach dem Anschwingen des Schaltnetzteils eine der Lastspannung proportionale Spannung liefert.

Im Laufe des Betriebs kann das Schaltnetzteil in kritische Situationen kommen, in denen es sich automatisch stoppen muß, um bestimmte Bauelemente vor Beschädigungen zu schützen. Kritisch können beispielsweise eine sekundärseitige Uberlastung, eine Überhitzung oder eine zu geringe Netzspannung werden. Wird der Betrieb eingestellt, d.h. der Schalttransistor gesperrt, dann fällt die aus der Versorgungswicklung bezogene Spannung ab, bis sie eine Inaktivierungsschwelle U_{A} (U_{A} < U_{E}) unterschreitet. In diesem Fall schaltet die Steuerschaltung sämtliche Arbeitspunkte aus und kehrt in ihren inaktiven Zustand mit geringer Stromaufnahme zurück. Dementsprechend wird der Ladekondensator wieder aufgeladen und nach Erreichen der Spannung U_{E} wieder entladen. Ist der Schalttransistor noch immer blockiert, so kann die Versorgungswicklung die wieder sinkende Versorgungsspannung nicht stützen, mit dem Resultat, daß U_{V} < U_{A} wird und die Steuerschaltung aus dem inaktiven Zustand heraus einen neuen "Abfragezyklus" beginnt. Dieser Abfrage-Betrieb, in dem die Einschalthysterese periodisch durchlaufen wird, hält solange an, bis das Schaltnetzteil für einen neuen Anlauf freigegeben ist. Die Zeit, die die Versorgungsspannung benötigt, um von U_{A} auf U_{E} anzusteigen, wird im wesentlichen durch den Widerstandswert des Anlaufwiderstandes und die Kapazität des Ladekondensators bestimmt. Sie ist aus Sicherheitsgründen so gewählt, daß ein neuer Anlaufsversuch erst mit einer gewissen Verzögerung, die bis etwa 1 Sekunde betragen kann, nach Freigabe des Transistors erfolgt.

Für eine Reihe von Anwendungen wird verlangt, daß der Ansteuerbaustein auch durch ein äußeres Signal inaktiviert werden kann. Beispielsweise soll es möglich sein, ein Fernsehgerät zu einem frei wählbaren Zeitpunkt in den sogenannten "Stand-by"-Betrieb zu versetzen. Hier wäre es wünschenswert, daß das Gerät bei Wegfall des Abschaltbefehls unverzüglich - und nicht etwa erst nach einer bis zu 1 Sekunde dauernden Verzögerung - anschwingt.

Aufgabe der vorliegenden Erfindung ist es daher, die eingangs genannte Schaltungsanordnung mit möglichst einfachen Schaltmitteln so zu ergänzen, daß das Schaltnetzteil nach Beendigung des Abschaltbefehls möglichst rasch wieder in den Normalbetrieb gelangt. Diese Aufgabe wird durch die kennzeichnenden Merkmale des Patentanspruchs 1 gelöst.

Vorteilhafte Ausgestaltungen und Weiterbildungen der Erfindung sind Gegenstand zusätzlicher Ansprüche.

Die Erfindung soll nun anhand eines Ausführungsbeispiels unter Bezugnahme auf die Figuren der beigefügten Zeichnung näher erläutert werden. In den Figuren sind einander entsprechende Teile mit gleichen Bezugszeichen versehen. Es zeigen:
- FIG 1: die vereinfachte Schaltungsanordnung eines typischen Schaltnetzteils,
- FIG 2: die Versorgungsspannung U_{V} der Steuerschaltung als Funktion der Zeit t;
- FIG 3: die Ausgangsspannung U_{L} des Schaltnetzteils, in der Darstellungsweise der FIG 2;
- FIG 4: die Abschaltspannung U_{S} als Funktion der Zeit t; und
- FIG 5: das Schaltbild eines erfindungsgemäßen Ausführungsbeispiels, wobei von der Schaltungsanordnung nur ein Teil der integrierten Schaltung dargestellt ist.

Der Übersicht halber sind für ein Verständnis der Erfindung nicht unbedingt erforderliche Teile der Schaltungsanordnung weggelassen. Für eine vollständige Erläuterung der Schaltung wird auf die bereits zitierte Siemens-Produktinformation sowie auf die ältere deutsche Patentanmeldung P 39 02 164.5 verwiesen.

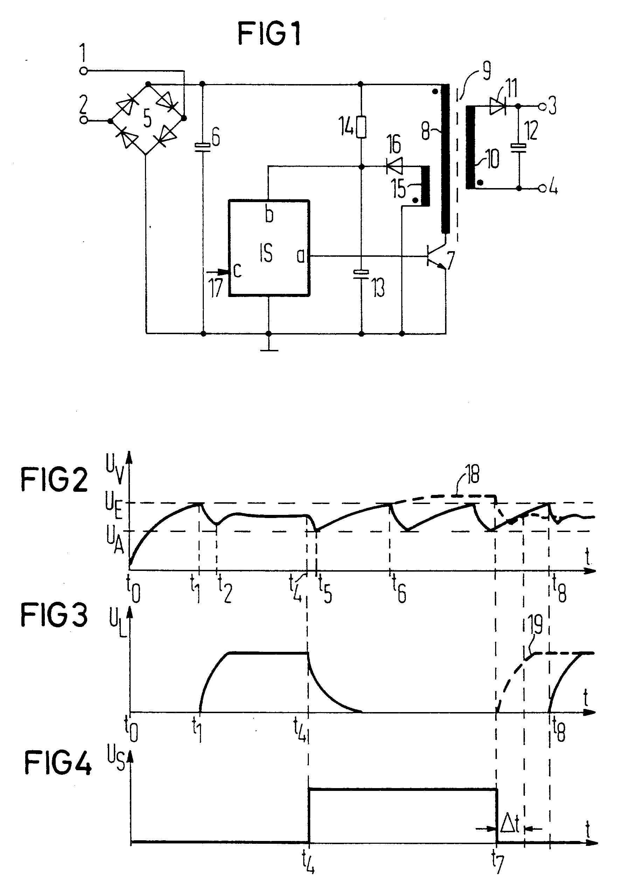

Das Schaltnetzteil der FIG 1, ein freischwingender Sperrwandler, bezieht an den Klemmen 1 und 2 eine Netzspannung und liefert an den Klemmen 3 und 4 eine stabilisierte Gleichspannung. Zu diesem Zweck wird die Netzspannung in einem Gleichrichter 5 gleichgerichtet, in einem Kondensator 6 geglättet und dann über einen Schalttransistor 7 auf eine Primärwicklung 8 eines Transformators 9 geführt. Der Transformator nimmt in der Flußphase, in der der Schalttransistor leitend geschaltet ist, Energie auf und gibt diese Energie in der Sperrphase, in der der Schalttransistor 7 sperrt, an eine zwischen den Klemmen 3 und 4 liegende, nicht dargestellte Last ab. Dabei fließt im Lastkreis in einer Sekundärwicklung 10 ein Strom, der in einem Gleichrichter 11 und einem Kondensator 12 gleichgerichtet bzw. gesiebt wird.

Der Schalttransistor 7 wird durch eine integrierte Steuerschaltung IS, für die beispielsweise die bereits erwähnte TDA 4605 verwendet werden könnte, impulsbreitenmoduliert angesteuert. Der Ansteuerimpuls wird von der Steuerschaltung am Pin a abgegeben und auf die Basis des Schalttransistors 7 geführt.

Die Steuerschaltung erhält ihre Versorgungsspannung U_{V} am Pin b. Überschreitet U_{V} den Wert U_{E}, der etwa bei 11 V liegt, dann wird die Steuerschaltung aktiviert und nimmt einen Strom von 10 mA auf. Sinkt U_{V} unter einen Wert U_{A}, der etwa 6 V beträgt, so fällt die Steuerschaltung in ihren inaktiven Zustand zurück, in dem sie nur einen Strom von etwa 1 mA verbraucht. Im inaktiven Zustand wird U_{V} aus einem parallel zur Steuerschaltung liegenden Ladekondensators 13 bezogen, der über einen Vorwiderstand 14 unmittelbar aus der gleichgerichteten und geglätteten Netzspannung aufgeladen wird. Im aktivierten Zustand wird die Steuerschaltung von einer Spannung gespeist, die aus einer sekundärseitigen Versorgungswicklung 15 des Transformators 9 abgenommen und in einem Gleichrichter 16 gleichgerichtet wird. Der aus der Versorgungswicklung 15 und dem Gleichrichter 16 gebildete Zweig liegt parallel zum Ladekondensator 13 und zur Steuerschaltung IS.

Nach Inbetriebnahme des Geräts haben die Versorgungsspannung U_{V} und die an den Klemmen 3, 4 liegende Lastspannung U_{L} einen Verlauf, der jeweils in den FIG 2 und 3 dargestellt ist. Diese Funktionen werden durch einen von außen auf Pin c der Steuerschaltung IS gegebenen Abschaltbefehl U_{S} (Pfeil 17) beeinflußt, der in FIG 4 als Funktion der Zeit t wiedergegeben ist.

Nach Anlegen der Netzspannung im Zeitpunkt t₀ steigt U_{V} bis zum Wert U_{E} (Zeitpunkt t₁). Bei t₁ beginnt das Schaltnetzteil anzulaufen, d.h. die Lastspannung U_{L} zuzunehmen, mit der Folge, daß die aus dem Ladekondensator entnommene Versorgungsspannung U_{V} abnimmt. Mit ansteigender Lastspannung steigt auch die von der Versorgungswicklung abgegebene Spannung, die dann vom Zeitpunkt t₂ an die Versorgungsspannung stützt und im eingeschwungenen Zustand auf einem bestimmten Niveau stabilisiert.

Erhält nun Pin c ein Abschaltsignal (Zeitpunkt t₄), so bricht U_{L} und damit die von der Versorgungswicklung gelieferte Spannung U_{V} bis auf U_{A} (Zeitpunkt t₅) zusammen. Die Steuerschaltung wird dann inaktiviert, zieht wenig Strom und erhält demzufolge eine steigende Versorgungsspannung, bis sie zum Zeitpunkt t₆ wieder aktiviert wird und dementsprechend U_{V} wieder abfällt. Da das Abschaltsignal U_{S} noch anliegt, bleibt der Schalttransistor 7 ausgeschaltet, so daß ein neuer Abfragezyklus beginnt. Bei t₇ fällt U_{S} weg. Bis nun die Steuerschaltung wieder aktiviert wird (t₈) kann es, wie den Diagrammen entnehmbar, nahezu eine ganze Ladeperiode des Kondensators dauern.

Um diese Verzögerungszeit deutlich zu reduzieren, ist erfindungsgemäß vorgesehen, die Steuerschaltung dann, wenn an Pin c ein Abschaltsignal anliegt, nicht zu aktivieren. In diesem Fall kann sich der Kondensator nicht entladen (er wird in der Tat weiter aufgeladen), so daß bei Wegfall des Signals sofort eine Spannung (U_{V} > U_{E}) zur Verfügung steht und das Schaltnetzteil sogleich mit dem Anlauf beginnen kann. U_{V} und U_{L} nehmen dann einen Verlauf, der in den FIG 2 und 3 mit den Kurven 18 bzw. 19 angedeutet ist. Die Zeitspanne, nach der das Gerät dann nach Wegfall des Abschaltsignals wieder mit voller Leistung arbeitet (Δ ₜ), ist auf ein Minimum reduziert.

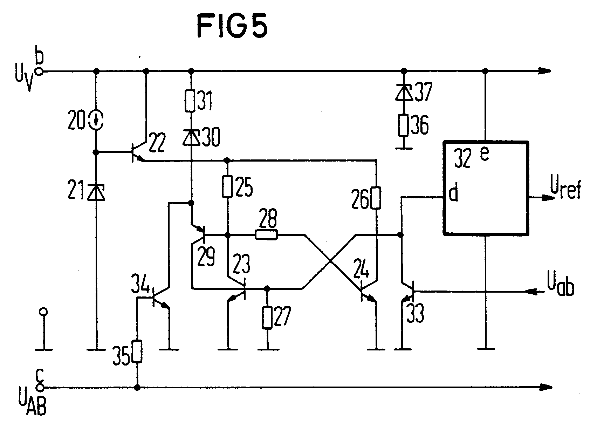

FIG 5 zeigt, mit welchen Schaltmitteln man die Aktivierung des Bausteins bei anliegendem Abschaltbefehl blockieren kann. Die von der Steuerschaltung an Pin b empfangene Versorgungsspannung wird durch einen Vorstabilisator, der aus einer Stromquelle 20, einer Zenerdiode 21 und einem Transistor 22 gebildet wird, auf einem bestimmten Wert, beispielsweise etwa 7 V, gehalten. Mit dieser vorstabilisierten Spannung wird ein Flip-Flop versorgt. Das Flip-Flop enthält die Transistoren 23, 24, Kollektorwiderstände 25, 26 und Widerstände 27, 28, in den jeweiligen Basiskreisen. Die Kollektor-Emitter-Strecken beider Transistoren liegen - jeweils über einen Kollektorwiderstand - zwischen dem Emitter des Transistors 22 und Masse. Der Kollektor des Transistors 23 ist mit der Basis eines pnp-Transistors 29 verbunden, dessen Emitter über eine Zenerdiode 30 und einen Vorwiderstand 31 an die Versorgungsspannung gelegt ist und dessen Kollektor an die Basis des Transistors 23, den Kollektor des Transistors 24 und einen Eingang d einer Referenzspannungsquelle 32 führt. Das aus dem Widerstand 31, der Zenerdiode 30 und dem Transistor 29 gebildete Reihenglied erzeugt in Abhängigkeit von der Höhe der Versorgungsspannung ein Set-Signal für den Flip-flop, der bei U_{V} > U_{E} eine logische "1" und bei U_{V} < U_{A} eine logische "0" auf die Referenzspannungsquelle 32 gibt. Diese Referenzspannungsquelle, die über einen Eingang e die Versorgungsspannung U_{V} erhält, gibt dann, und nur dann, wenn an d eine "1" anliegt, an Ausgang f eine Referenzspannung U_{ref} ab.

Um sicherzustellen, daß die Referenzspannungsquelle 32 bei U_{V} < U_{A} eine "0" erhält, liegt parallel zum Transistor 24 ein weiterer Transistor 33, dessen Basis durch ein bei U_{V} < U_{A} gebildetes Abschaltsignal U_{ab} beaufschlagt wird und bei Vorliegen dieses Signals das Flip-Flop zurücksetzt.

Damit nun bei Anlegen eines Abschaltbefehls U_{AB} an Pin c das Flip-Flop nicht gesetzt werden kann, wird der Emitter des Transistors 29 über die Kollektor-Emitter-Strecke eines Transistors 34 mit Masse verbunden. Der Abschaltbefehl wirkt über einen Widerstand 35 auf die Basis des Überbrückungstransistors, mit dem Resultat, daß in Gegenwart des Befehls der Emitter des Transistors 29 nach Masse kurzgeschlossen und somit das Flip-Flop nicht gesetzt werden kann. Der Abschalteingang c ist im übrigen mit der (nicht dargestellten) Ausgangsstufe des Bausteins verbunden; liegt ein Abschaltbefehl vor, werden die Startimpulse für den Schalttransistor blockiert.

Damit die Versorgungsspannung während der Zeit, in der an der Steuerschaltung ein Abschaltbefehl anliegt, nicht über ihren zulässigen Grenzwert ansteigt, ist sie intern auf einen niedrigeren Wert geklemmt, und zwar durch ein an Masse liegendes, aus einem Widerstand 36 und einer Zenerdiode 37 gebildetes Reihenglied.

Die Erfindung ist nicht auf das dargestellte Ausführungsbeispiel beschränkt. Sie kommt stets dann in Frage, wenn eine integrierte Steuerschaltung bei eingeschaltetem Schaltnetzteil durch einen äußeren Befehl inaktiviert werden kann und nach ihrer Reaktivierung sofort alle ihre Funktionen wiederaufnehmen soll. Dementsprechend ist es beispielsweise ohne Belang, ob das Schaltnetzteil als Sperr- oder Durchflußwandler konzipiert ist, selbstschwingend oder festfrequent arbeitet, einen oder mehrere Schalter enthält, eine oder mehrere Lastspannungen liefert oder den Ansteuerbaustein über eine primär- oder sekundärseitige Wicklung speist.

## Patentansprüche

1. Schaltungsanordnung für ein Schaltnetzteil, mit folgenden Merkmalen:
1) das Schaltnetzteil enthält einen Transformator mit
a) einer Primärwicklung, die im Kreis einer Gleichspannungsquelle in Reihe mit einem elektrischen steuerbaren Schalter leigt, und
b) einer Sekundärwicklung, die mit einer Last verbunden ist;
2) die Schaltungsanordnung enthält zum Ein- und Ausschalten des Schalters eine integrierbare Steuerschaltung, die im Betrieb des Schaltnetzteils
a) in einem ersten Betriebszustand (inaktiver Zustand), in dem sie den Schalter nicht schalten kann, ihre Versorgungsspannung von einem zur Steuerschaltung parallelen, über einen Anlaufwiderstand mit der Gleichspannungsquelle verbundenen Ladekondensator erhält und
b) in einem zweiten Betriebszustand (aktiver Zustand), in dem sie den Schalter schalten kann, ihre Versorgungsspannung bei aktiven Schalterbetrieb von einer zum Ladekondensator parallelen Transformatorwicklung bezieht,
c) bei steigender Versorgungsspannung dann, wenn eine Einschaltschwelle (U_{E}) überschritten ist, vom inaktiven in den aktiven Zustand übergeht und bei sinkender Versorgungsspannung dann, wenn eine Ausschaltschwelle (U_{A}, U_{A} < U_{E}) unterschritten ist, vom aktiven in den inaktiven Zustand zurückkehrt und
d) den Schalter nicht einschaltet, wenn ein von außen eingebbarer Abschaltbefehl anliegt,
**dadurch gekennzeichnet,** daß
e) die Schaltungsanordnung Schaltmittel (Fig. 5) enthält, die verhindern, daß die Steuerschaltung bei anliegendem Abschaltbefehl (U_{AB}) in den aktiven Zustand übergeht.

2. Schaltungsanordnung nach Anspruch 1, bei der die Steuerschaltung durch Setzen eines Einschalt-Flip-Flops in den aktiven Zustand übergeht, **dadurch gekennzeichnet,** daß das Setzsignal für das Einschalt-Flip-Flop (23 bis 28) bei anliegendem Abschaltbefehl (U_{AB}) kurzgeschlossen wird.

3. Schaltungsanordnung nach Anspruch 2, **dadurch gekennzeichnet,** daß die das Setzsignal führende Leitung über die Kollektor-Emitter-Strecke eines Transistors (34) nach Masse geschaltet ist, dessen Basis mit der den Abschaltbefehl (U_{AB}) führenden Leitung verbunden ist.

4. Schaltungsanordnung nach einem der Ansprüche 1 bis 3, **dadurch gekennzeichnet,** daß die Versorgungsspannung (U_{V}) durch eine Klemmschaltung auf einen maximalen Wert begrenzt ist.

5. Schaltungsanordnung nach Anspruch 4, **dadurch gekennzeichnet,** daß die Klemmschaltung ein aus einem Widerstand (36) und einer Zenerdiode (37) gebildetes Reihenglied ist, das zwischen der Versorgungsspannung und Masse liegt.

## Claims

1. Circuit arrangement for a switched-mode power supply, having the following features:
1) the switched-mode power supply contains a transformer having
a) a primary winding which is connected in the circuit of a DC voltage source, in series with an electrical controllable switch, and
b) a secondary winding which is connected to a load;
2) in order to switch the switch on and off, the circuit arrangement contains a control circuit which can be integrated and which, in operation of the switched-mode power supply
a) in a first operating mode (inactive mode), in which it cannot switch the switch, receives its supply voltage from a charge capacitor which is in parallel with the control circuit and is connected to the DC voltage source via a start-up resistor and
b) in a second operating mode (active state), in which it can switch the switch, takes its voltage supply in the active switch mode from a transformer winding which is in parallel with the charge capacitor,
c) when the supply voltage is rising, changes from the inactive mode to the active mode when a switching-on threshold (U_{E}) is exceeded and, when the supply voltage is falling, returns from the active mode to the inactive mode when the supply voltage falls below a switching-off threshold (U_{A}, U_{A} < U_{E}), and
d) does not switch the switch on if a cut-off command, which can be input externally, is present,
characterized in that
e) the circuit arrangement contains switching means (Fig. 5) which prevent the control circuit changing into the active mode when the cut-off command (U_{AB}) is present.

2. Circuit arrangement according to Claim 1, in which the control circuit changes into the active mode by setting a switching-on flip-flop, characterized in that the set signal for the switching-on flip-flop (23 to 28) is short-circuited when the cut-off command (U_{AB}) is present.

3. Circuit arrangement according to Claim 2, characterized in that the line which carries the set signal is connected to earth via the collector-emitter junction of a transistor (34) whose base is connected to the line which carries the cut-off command (U_{AB}).

4. Circuit arrangement according to one of Claims 1 to 3, characterized in that the supply voltage (U_{V}) is limited, by a clamping circuit, to a maximum value.

5. Circuit arrangement according to Claim 4, characterized in that the clamping circuit is a series element which is formed from a resistor (36) and a zener diode (37) and is connected between the supply voltage and earth.

## Revendications

1. Montage pour une alimentation à découpage, présentant les caractéristiques suivantes :
1) la partie de l'alimentation à découpage contient un transformateur comportant
a) un enroulement primaire, qui est branché, dans le circuit d'une source d'une tension continue, en série avec un interrupteur électrique commandable, et
b) un enroulement secondaire, qui est relié à une charge;
2) le montage contient, pour la fermeture et l'ouverture de l'interrupteur, un circuit de commande intégrable, qui, lors du fonctionnement de l'alimentation à découpage,
a) reçoit sa tension d'alimentation de la part d'un condenseur de charge, parallèle au circuit de commande et relié à la source de tension continue par l'intermédiaire d'une résistance de démarrage, dans un premier état de fonctionnement (état inactif), dans lequel le circuit de commande ne peut pas activer l'interrupteur, et
b) reçoit sa tension d'alimentation correspondant au fonctionnement effectif de l'interrupteur, de la part d'un enroulement du transformateur, qui est parallèle au condensateur de charge, dans un second état de fonctionnement (état actif), dans lequel le circuit de commande peut activer l'interrupteur,
c) est commuté de l'état inactif à l'état actif alors que la tension d'alimentation augmente, lorsqu'un seuil d'activation (U_{E}) est dépassé, et est commuté inversement de l'état actif à l'état inactif, alors que la tension d'alimentation diminue, lorsqu'un seuil de désactivation (U_{A}, U_{A} < U_{E}) est franchi par valeurs inférieures, et
d) ne ferme pas l'interrupteur lorsqu'est présente une instruction d'ouverture pouvant être introduite à partir de l'extérieur,
caractérisé par le fait que
e) le montage contient des moyens de commutation (figure 5), qui empêchent que le circuit de commande passe a l'état actif lorsque l'instruction de désactivation (U_{AB}) est présente.

2. Montage suivant la revendication 1, dans lequel le circuit de commande passe à l'état actif sous l'effet du positionnement d'une bascule bistable de fermeture, caractérisé par le fait que le signal de positionnement pour la bascule bistable de fermeture (23 à 28) est court-circuité lorsque l'instruction d'ouverture (U_{AB}) est présente.

3. Montage suivant la revendication 2, caractérisé par le fait que la ligne, qui véhicule le signal de positionnement, est raccordée à la masse par l'intermédiaire de la section collecteur-émetteur d'un transistor (34), dont la base est reliée à la ligne qui véhicule l'instruction d'ouverture (U_{AB}).

4. Montage suivant l'une des revendications 1 à 3, caractérisé par le fait que la tension d'alimentation (U_{V}) est limitée par un circuit de blocage, à une valeur maximale.

5. Montage suivant la revendication 4, caractérisé par le fait que le circuit de blocage est un circuit série, qui est formé par une résistance (36) et une diode Zener (37) et qui est situé entre la tension d'alimentation et la masse.
